(19) Europäisches Patentamt / European Patent Office / Office européen des brevets

(11) **EP 2 781 992 A2**

(12) **EUROPEAN PATENT APPLICATION**

(43) Date of publication:
24.09.2014 Bulletin 2014/39

(51) Int Cl.:
*G06F 3/01* (2006.01)          *G06F 3/0481* (2013.01)
*G06F 3/0354* (2013.01)

(21) Application number: 14160399.3

(22) Date of filing: 18.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.03.2013 KR 20130031034

(71) Applicant: Samsung Electronics Co., Ltd.
Suwon-si Gyeonggi-do 443-742 (KR)

(72) Inventors:
• Park, Jin-Hyoung
443-742 Gyeonggi-do (KR)
• Lee, Sang-Hyup
443-742 Gyeonggi-do (KR)
• Lee, Ju-Youn
443-742 Gyeonggi-do (KR)

(74) Representative: Grünecker, Kinkeldey,
Stockmair & Schwanhäusser
Leopoldstrasse 4
80802 München (DE)

(54) **Portable terminal with pen for providing a haptic effect**

(57)     Methods and apparatus are provided for providing a haptic effect by a portable terminal and an input device. A writing application is displayed on a touch screen of the portable terminal (S610). A selection for a type of pen used for writing in the displayed writing application and a selection for a background material on which the writing is performed are received using the selected type of pen (S612). A haptic pattern of the selected type of pen and a haptic pattern of the background material are combined (S614). Haptic feedback is output based on a combined haptic pattern of the selected type of pen and the background material (S616). A control signal having the haptic feedback is received at the input unit that controls a vibration of a vibration device of the input unit. The received control signal is analyzed to control the vibration of the vibration device (S618).

FIG.6

EP 2 781 992 A2

**Description**

BACKGROUND OF THE INVENTION

1. Field of the Invention

The present invention relates generally to a portable terminal, and For example, a portable terminal and a method for providing a haptic effect.

2. Description of the Related Art

Several to hundreds of applications may be stored in a portable terminal such as, for example, a smart phone or a tablet Personal Computer (PC). Further, objects (or short-cut icons) for executing the applications are displayed on a touch screen of the portable terminal. Accordingly, the user can execute a desired application in the portable terminal by touching one of the shortcut icons displayed on the touch screen. Further, various types of visual objects such as a widget, a picture, a document, and the like, are displayed on the touch screen of the portable terminal as well as the shortcut icons.

As described above, the portable terminal provides a touch input scheme using an input unit such as, for example, a user's finger, an electronic pen, a stylus pen, or the like, on the displayed objects. The touch input scheme includes an input type by a contact with a touchable input unit and an input type by a non-contact such as a hovering, and the touch input scheme provides a convenient user interface.

An input scheme has been used in which a vibration is generated to allow the user to feel as though a button was pressed through a vibration device, when there is a touch input in an input scheme through the touch screen. Such a method allows the user only to recognize a contact of the input unit with the touch screen and has a limitation in transmitting a feeling felt by the user when the user actually uses an application.

**SUMMARY OF THE INVENTION**

The present invention has been made to address at least the above problems and/or disadvantages and t provide at least the advantages described below. Accordingly, an aspect of the present invention provides a portable terminal and a method for providing a haptic effect when a user interface is controlled in a portable terminal including at least one touch screen.

In accordance with an aspect of the present invention, a method is provided for providing a haptic effect by a portable terminal. A writing application is displayed on a touch screen of the portable terminal. A selection for a type of pen used for writing in the displayed writing application and a selection for a background material on which the writing is performed are received using the selected type of pen. A haptic pattern of the selected type of pen and a haptic pattern of the background material are combined. Haptic feedback is output based on a combined haptic pattern of the selected type of pen and the background material.

In accordance with another aspect of the present invention, a portable terminal is provided that provides a haptic effect. The portable terminal includes a touch screen that displays a writing application, receives a selection for a type of a pen used for writing in the displayed writing application, and receives a selection for a background material on which the writing is made using the selected type of pen. The portable terminal also includes a controller that controls to output haptic feedback corresponding to a combination of a haptic pattern of the selected type of pen and a haptic pattern of the background material. The portable terminal further includes a transceiver that transmits a control signal corresponding to the haptic feedback to an input unit.

In accordance with another aspect of the present invention, a method is provided for providing a haptic effect by an input unit. A control signal is received that controls a vibration of a vibration device of the input unit, at the input unit from a portable terminal. The received control signal is analyzed to control the vibration of the vibration device. The control signal comprises a haptic pattern of a pen displayed on a touch screen of the portable terminal, a haptic pattern of a background material on which writing is made using the pen, or a haptic pattern generated by combining the haptic pattern of the pen and the haptic pattern of the background material.

In accordance with another aspect of the present invention, an input unit is provided that provides a haptic effect. The input unit includes a vibration device that outputs a vibration. The input unit also includes a short distance communication unit that receives a control signal controlling a vibration of the vibration device, from a portable terminal. The input unit further includes a haptic controller that analyzes the received control signal to control the vibration of the vibration device. The control signal comprises a haptic pattern of a pen displayed on a touch screen of the portable terminal, a haptic pattern of a background material on which writing is made using the pen, or a haptic pattern generated by combining the haptic pattern of the pen and the haptic pattern of the background material.

## BRIEF DESCRIPTION OF THE DRAWINGS

The above and other aspects, features, and advantages of the present invention will be more apparent from the following detailed description when taken in conjunction with the accompanying drawings, in which:

FIG. 1 is a block diagram illustrating a portable terminal providing a haptic effect, according to an embodiment or the present invention;

FIG. 2 is a diagram illustrating a front perspective view of a portable terminal, according to an embodiment of the present invention;

FIG. 3 is a diagram illustrating a rear perspective view of a portable terminal, according to an embodiment of the present invention;

FIG. 4 is a diagram illustrating a cross-sectional view of the inside of an input unit and a touch screen, according to an embodiment of the present invention;

FIG. 5 is a block diagram illustrating an input unit providing a haptic effect, according to an embodiment of the present invention;

FIG. 6 is a flowchart illustrating a method of providing haptic feedback in accordance with a pen type and a background material type, according to an embodiment of the present invention;

FIG. 7A is a diagram illustrating selection of a background material in a writing application, according to an embodiment of the present invention;

FIG. 7B is a diagram illustrating the showing of background material types in a writing application, according to an embodiment of the present invention;

FIG. 7C is a diagram illustrating selection of a pen in a writing application, according to an embodiment of the present invention;

FIG. 7D is a diagram illustrating the showing of a pen type, according to an embodiment of the present invention;

FIG. 7E is a diagram illustrating the displaying of a waveform generated by combining a haptic waveform of a pen selected in FIG. 7B and a haptic waveform of a background material selected in FIG. 7D through a preview, according to an embodiment of the present invention;

FIG. 7F is a diagram illustrating the inputting of characters into the background material selected in FIG. 7D by using the pen selected in FIG. 7B, according to an embodiment of the present invention;

FIG. 8A shows a haptic waveform predetermined for a pen, according to an embodiment of the present invention;

FIG. 8B shows a haptic waveform to which a parameter is applied, according to an embodiment of the present invention;

FIG. 8C shows a haptic waveform of a background material, according to an embodiment of the present invention;

FIG. 8D shows a haptic waveform generated by applying a parameter to a haptic waveform of a background material, according to an embodiment of the present invention;

FIG. 8E shows combining a haptic waveform predetermined for a pen and a haptic waveform predetermined for a background material, according to an embodiment of the present invention;

FIG. 8F shows a result generated by combining haptic waveforms of a pen and a background, according to an embodiment of the present invention;

FIG. 9A shows a waveform of a haptic pattern when a background material is paper, according to an embodiment of the present invention;

FIG. 9B shows a waveform of a haptic pattern when a background material is crumpled paper, according to an embodiment of the present invention;

FIG. 9C shows a waveform of a haptic pattern when a background material is wood, according to an embodiment of the present invention;

FIG. 9D shows a waveform of a haptic pattern when a background material is cement, according to an embodiment of the present invention;

FIG. 9E shows of a waveform of a haptic pattern when a background material is old paper, according to an embodiment of the present invention;

FIG. 9F shows a waveform of a haptic pattern when a pen is a ballpoint pen, according to an embodiment of the present invention;

FIG. 9G shows a waveform of a haptic pattern when a pen is a pencil, according to an embodiment of the present invention;

FIG. 9H shows a waveform of a haptic pattern when a pen is a brush, according to an embodiment of the present invention;

FIG. 9I shows a waveform of a haptic pattern when a pen is a fountain pen, according to an embodiment of the present invention;

FIG. 9J shows a waveform of a haptic pattern when a pen is a marker, according to an embodiment of the present invention; and

FIG. 10 shows a waveform of a haptic pattern when characters are written on crumbled paper by using a ballpoint pen, according to an embodiment of the present invention.

## DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

While terms including ordinal numbers, such as "first" and "second," etc , may be used to describe various components, such components are not limited by the above terms. The terms are used merely for the purpose of distinguishing an element from the other elements. For example, a first element could be termed a second element, and similarly, a second element could be also termed a first element without departing from the scope of the present. As used herein, the term "and/or" includes any and all combinations of one or more of the associated listed items.

The terms in this application are used for the purpose of describing particular embodiments only and are not intended to be limiting of the invention. As used herein, the singular forms are intended to include the plural forms as well, unless the context clearly indicates otherwise. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification.

The terms which will be described below are terms defined in consideration of the functions in the present invention, and may be different according to users, intentions of the users, or customs. Therefore, its definition will be made based on the overall contents of this specification.

First, the terms used in the present invention are defined as follows.

Portable terminal: the portable terminal corresponds to a mobile terminal, which can be carried, and performs data transmission/reception and a video phone call and includes one or more touch screens. The portable terminal includes a smart phone, a tablet PC, a smart Television (TV), a Light Emitting Diode (LED) TV, a Liquid Crystal Display (LCD) TV and the like, and also includes a peripheral device or a terminal which can communicate with another terminal located at a remote position.

Input unit: the input unit includes at least one of a finger, an electronic pen, and a stylus pen, which can provide a command or an input to the portable terminal in either a contact state with a touch screen or a noncontact state such as a hovering.

Object: the object is displayed on the touch screen of the portable terminal or corresponds to something to be displayed, which includes at least one of a document, a widget, a picture, a video, an e-mail, letter paper, a Short Message Service (SMS) message, and a Multimedia Messaging Service (MMS) message, and may be executed, deleted, canceled, stored, and changed by the input unit. The object may be used as a concept including a short-cut icon, a thumbnail image, and a folder that stores at least one object in the portable terminal.

Short-cut icon: the short-cut icon is displayed on the touch screen of the portable terminal to rapidly execute functions such as a call, contact information, and a menu basically provided by each application or the portable terminal. When a command or an input for executing such a function is input, a corresponding application is executed.

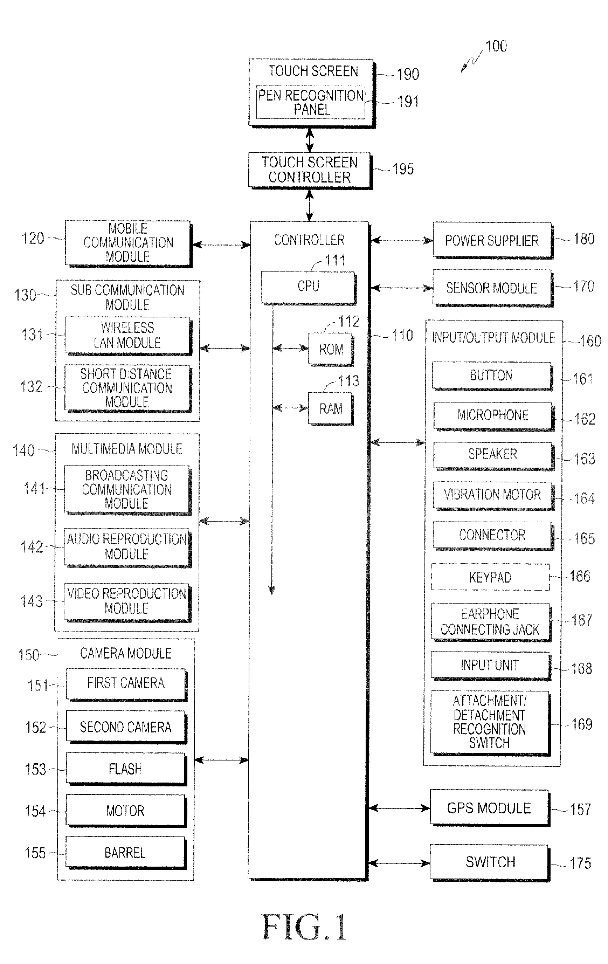

FIG. 1 is a block diagram illustrating a portable terminal providing a haptic effect, according to an embodiment of the present invention.

Referring to FIG. 1, a portable terminal 100 can be connected with an external device by using at least one of a mobile communication module 120, a sub communication module 130, a connector 165, and an earphone connecting jack 167. The external device includes various devices attached to or detached from the portable terminal 100 through a cable, such as an earphone, an external speaker, a Universal Serial Bus (USB) memory, a charger, a cradle/dock, a DMB antenna, a mobile payment related device, a health management device (blood sugar tester or the like), a game machine, a car navigation device and the like. Further, the external device includes a Bluetooth communication device, a Near Field Communication (NEC) device, a WiFi Direct communication device, and a wireless Access Point (AC) which can be wirelessly connected. In addition, the portable terminal 100 can be connected with another device, that is, a mobile phone, a smart phone, a tablet PC, a desktop PC, or a server wirelessly or through a wire.

Referring to FIG. 1, the portable terminal 100 includes at least one touch screen 190 and at least one touch screen controller 195. Further, the portable terminal 100 includes a controller 110, the mobile communication module 120, the sub communication module 130, a multimedia module 140, a camera module 150, a Global Positioning System (GPS) module 157, an input/output module 160, a sensor module 170, a storage unit 175, and a power supplier 180.

The sub communication module 130 may include at least one of a Wireless Local Area Network (WLAN) module 131 and a short distance communication module 132. The multimedia module 140 may include at least one of a broadcasting communication module 141, an audio reproduction module 142, and a video reproduction module 143. The camera module 150 may include at least one of a first camera 151 and a second camera 152. Further, the camera module 150 of the portable terminal 100, according to an embodiment of the present invention, may include at least one of a barrel 155 for zooming in/zooming out the first and/or second cameras 151 and/or 152, a motor 154 for controlling a motion of the barrel 155 to zoom in/zoom out the barrel 155, and a flash 153 for providing a light source for photographing according to a main purpose of the portable terminal 100. The input/output module 160 may include at least one of a button 161, a microphone 162, a speaker 163, a vibration motor 164, a connector 165, and a keypad 166.

The controller 110 may include a Central Processing Unit (CPU) 111, a Read Only Memory (ROM) 112 storing a control program for controlling the portable terminal 100, and a Random Access Memory (RAM) 113 used as a storage area for storing a signal or data input from the outside of the portable terminal 100 or for work performed in the portable terminal 100. The CPU 111 may include a single core, a dual core, a triple core, or a quadruple core. The CPU 111, the ROM 112, and the RAM 113 can be mutually connected to each other through an internal bus.

Further, the controller 110 can control the mobile communication module 120, the sub communication module 130, the multimedia module 140, the camera module 150, the GPS module 157, the input/output module 160, the sensor module 170, the storage unit 175, the power supplier 180, the touch screen 190, and the touch screen controller 195.

The controller 110 can detect various user inputs received through the camera module 150, the input/output module 160, and the sensor module 170, as well as through the touch screen 190. The user input may include various types of information such as the touch and also a gesture, a voice, and a pupil action, and a bio-signal of the user, which are input into the portable terminal 100. The controller 110 can provide control for a predetermined action or function corresponding to the detected user input to be executed within the portable terminal 100.

The controller 110 may determine whether hovering is recognized as the touchable input unit 168, such as, tor example, an electronic pen, approaches one object in a state where a plurality of objects are displayed on the touch screen 190, or determines whether there is a touch of the input unit 168 on the touch screen 190. The controller 110 can detect a height from the portable terminal 100 to the input unit 168 and a hovering input, according to the height. For example, the controller 110 may detect a touch input generated by a hovering input by the input unit 168 or a touch of the input unit 168 on the touch screen 190.

The controller 110 detects an event or motion of the input unit 168 on the touch screen displaying at least one object and generates a control signal including a haptic pattern in accordance with the detected event or motion. The control signal may include a signal for controlling a vibration of the input unit 168 according to the haptic pattern. As described above, when the user writes on the touch screen by using the input unit 168, the portable terminal 100 may combine a haptic pattern corresponding to a pen type applied to the input unit 168 and a haptic pattern corresponding to a background material on which the writing is made by using the pen, and transmit a control signal including the combined haptic pattern to the input unit 168 in order to control a vibration of the input unit 168. The controller 110 may read a haptic pattern corresponding to each of a plurality of pens pre-stored in the storage unit 175, and read a haptic pattern corresponding to a background material of a background of a character string written by or a picture drawn by the pen from the storage unit 175. Thereafter, the controller 110 may combine the haptic pattern according to a pen type read from the storage unit 1 75 and the haptic pattern according to a background material type, and control the vibration through haptic feedback based on the combined haptic pattern.

Further, the controller 110 may detect a motion of the input unit 168 until a time (that is, a time when the character or picture is completely input) when successive motions of the input unit 168 end on the touch screen 190, generate a control signal corresponding to a combined haptic pattern during the movement of the input unit 168, and transmit the generated control signal to the input unit 168. The input unit 168 having received the control signal vibrates by analyzing a vibration cycle and a vibration time, according to the haptic pattern included in the control signal.

The mobile communication module 120 enables the portable terminal 100 to be connected with the external device through mobile communication by using at least one antenna or a plurality of antennas, according to a control of the controller 110. The mobile communication module 120 transmits/receives a wireless signal for a voice phone call, a video phone call, an SMS, or an MMS to/from a mobile phone, a smart phone, a tablet PC, or another device having a phone number input into the portable terminal 100.

The sub communication module 130 may include at least one of the WLAN module 131 and the short distance communication module 132. For example, the sub communication module 130 may include only the WLAN module 131, only the short distance communication module 132, or both the WLAN module 131 and the short distance communication module 132.

The WLAN module 131 can be Internet-connected according to a control of the controller 110 in a place where a wireless Access Point (AP) is installed. The WLAN module 131 supports a WLAN standard (IEEE802.11x) of the Institute of Electrical and Electronics Engineers. The short distance communication module 132 can wirelessly perform short distance communication between the portable terminal 100 and an image forming apparatus, according to a control of the controller 110. A short distance communication scheme may include Bluetooth, Infrared Data Association (IrDA) communication, WiFi-Direct communication, NEC, and the like.

The controller 110 can transmit a control signal according to a haptic pattern to the input unit through at least one of the sub communication module 130 and the WLAN module 131.

The portable terminal 100 may include at least one of the mobile communication module 120, the WLAN module 131, and the short distance communication module 132 according to a capability thereof. Further, the portable terminal 100 may include a combination of the mobile communication module 120, the WLAN module 131, and the short distance communication module 132, according to a capability thereof. According to an embodiment of the present invention, at least one or the combination of the mobile communication module 120. the WLAN module 131, and the short distance communication module 132 is referred to as a transceiver, which may not limit the scope of the present invention.

The multimedia module 140 may include the broadcasting communication module 141, the audio reproduction module 142, and the video reproduction module 143. The broadcasting communication module 141 can receive a broadcasting signal (for example, a TV broadcasting signal, a radio broadcasting signal, or a data broadcasting signal) and broadcasting supplement information (for example, an Electric Program Guide (EPG) or an Electric Service Guide (ESG) output from a broadcasting station through a broadcasting communication antenna, according to a control of the controller 110. The audio reproduction module 142 can reproduce a digital audio file (for example, a file having a file extension of mp3, wma, ogg, or wav) stored or received according to a control of the controller 110. The video reproduction module 143 can reproduce a digital video file (for example, a file having a file extension of mpeg, mpg, mp4, avi, mov, or mkv) stored or received according to a control of the controller 110. The video reproduction module 143 can reproduce the digital audio file.

The multimedia module 140 includes both the audio reproduction module 142 and the video reproduction module 143, aside from the broadcasting module 141. The audio reproduction module 142 or the video reproduction module 143 of the multimedia module 140 may be included in the controller 110.

The first camera 151 may be disposed on a front surface of the portable terminal 100, and the second camera 152 may be disposed on a back surface of the portable terminal 100. Alternatively, the first camera 151 and the second camera 152 may be located close to each other (for example, an interval between the first camera 151 and the second camera 152 between 1 cm and 8 cm) to photograph a three dimensional still image or a three dimensional video.

Each of the first and second cameras 151 and 152 includes a lens system, an image sensor and the like. Each of the first and second cameras 151 and 152 converts an optical signal input (or photographed input) through the lens system to an electrical image signal and outputs the converted electrical image signal to the controller 110. The user photographs a video or a still image through the first and second cameras 151 and 152.

The GPS module 157 can receive radio waves from a plurality of GPS satellites and calculate a position of the portable terminal 100 by using Time of Arrival from the GPS satellites to the portable terminal 100.

The button 161 may be formed on a front surface, a side surface, or a back surface of a a housing of the portable terminal 100, and may include at least one of a power/lock button, a volume button, a menu button, a home button, a back button, and a search button.

The microphone 162 receives a voice or a sound to generate an electrical signal, according to a control of the controller 110.

The speaker 16 can externally output sounds corresponding to various signals (for example, a wireless signal, a broadcasting signal, a digital audio file, a digital video file, taking a picture, or the like) of the mobile communication module 120, the sub communication module 130, the multimedia module 140, or the camera module 150, according to a control of the controller 110. Further, the speaker 163 can output a sound corresponding to a control signal transmitted to the input unit 168 through the short distance communication module 132. The control signal includes a haptic pattern of a selected pen that provides a vibration to the portable terminal or the input unit, a haptic pattern of a background material on which writing is made using the selected pen, or a haptic pattern generated by merging the haptic pattern of the selected pen and the haptic pattern of the background material. In addition, the control signal may include a pattern corresponding to a preview of showing in advance various haptic patterns. The sound corresponding to the control signal includes a sound according to an activation of the vibration device 520 of the input unit 168, a sound of which a size is changed in accordance with a vibration intensity, and a sound according to a deactivation of the vibration device 520. Volumes of the sounds are controlled according to the vibration intensity of the vibration device 520, or the sounds may be output through the speaker 163 of the portable terminal 100 and/or a speaker 560 included in the input unit 168 simultaneously with the activation of the vibration device 520 or at predetermined intervals (for example, 10 ms) before/after the activation. Further, the sounds may end simultaneously with the deactivation of the vibration device 520 or at predetermined intervals (for example, 10 ms) before/after the deactivation. In addition, the speaker 163 can output a sound (for example, button tone corresponding to phone communication or ringing tone) corresponding to a function performed by the portable terminal 100. One speaker 163 or a plurality of speakers 163 may be formed on a suitable position or positions of the housing of the portable terminal 100.

The vibration device 164 can convert an electrical signal to a mechanical vibration, according to a control of the controller 110. For example, when the portable terminal 100 in a vibration mode receives a voice phone call from another device, the vibration device 164 is operated. One vibration device 164 or a plurality of vibration devices 164 may be formed within the housing of the portable terminal 100. The vibration device 164 can operate in response to a touch action of the user who touches the touch screen 190 and successive motions of the touch on the touch screen 190.

The connector 165 may be used as an interface for connecting the portable terminal 100 with an external device or a power source. The portable terminal 100 can transmit data stored in the storage unit 175 of the portable terminal 100 to the external device or receive the data from the external device through a wired cable connected to the connector 165, according to a control of the controller 110. Further, the portable terminal. 100 can receive power from the power source through a wired cable connected to the connector 165 or charge a battery by using the power source.

The keypad 166 can receive a key input from the user for the control of the portable terminal 100. The keypad 166 includes a physical keypad formed in the portable terminal 100 or a virtual keypad displayed on the touch screen 190. The physical keypad formed in the portable terminal 100 may be omitted according to a capability or a structure of the portable terminal 100.

An earphone is inserted into the earphone connecting jack 167 to be connected with the portable terminal 100, and the input unit 168 may be inserted into the portable terminal 100 to be stored in the portable terminal 100 and may be withdrawn or separated from the portable terminal 100 when it is used. An attachment/detachment recognition switch 169 operating in accordance with attachment or detachment of the input unit 168 is located in one area within the portable terminal 100 into which the input unit 168 is inserted, and thus, can output signals corresponding to the attachment and the detachment of the input unit 168 to the controller 110. The attachment/detachment recognition switch 169 is located at one area into which the input unit 168 is inserted to directly or indirectly contact the input unit 168 when the input unit 168 is mounted. Accordingly, the attachment/detachment recognition switch 169 generates a signal corresponding to the attachment or the detachment of the input unit 168 based on the direct or indirect contact with the input unit 168, and then provides the generated signal to the controller 110.

The sensor module 170 includes at least one sensor for detecting a state of the portable terminal 100. For example, the sensor module 170 may include a proximity sensor for detecting whether the user approaches the portable terminal 100, a luminance sensor for detecting an amount of ambient light of the portable terminal 100, a motion sensor for detecting an acceleration or vibration applied to the portable terminal 100, a geo-magnetic sensor for detecting a point of the compass by using the Earth's magnetic field, a gravity sensor for detecting a gravity action direction, and an altimeter for measuring an atmospheric pressure to detect an altitude. At least one of the sensors can detect the state, generate a signal corresponding to the detection, and transmit the generated signal to the controller 110. The sensor of the sensor module 170 may be added or omitted according to a capability of the portable terminal 100.

The storage unit 175 can store a signal or data input/output in accordance with the operation of the mobile communication module 120, the sub communication module 130, the multimedia module 140, the camera module 150, the GPS module 157, the input/output module 160, the sensor module 170, or the touch screen 190. The storage unit 175 can store a control program and applications for controlling the portable terminal 100 or the controller 110.

Further, when a temporary touch or successive touches are made on the touch screen 190 by using the input unit 168, the storage unit 175 stores information on a vibration intensity and a vibration cycle according to a haptic pattern to provide various haptic effects to the input unit 168 or the portable terminal 100. The haptic pattern includes various patterns for each pen type and each background material according to a material on which the writing is made using the pen. The pen type applied to embodiments of the present invention includes various pens in addition to a ballpoint pen, a pencil, a brush, a felt-tip pen, and a marker. Further, the background material has surface roughness of a material such as paper on which characters can be written or a picture can be drawn, and includes various materials such as, for example, paper, wood, cement, cloth and the like. The paper also includes old paper of which a surface is somewhat rough and crumpled paper. The storage unit 175 stores a pattern providing a haptic effect for each pen type and each background material, and the pattern is read by a request of the controller 110. Further, the storage unit 175 stores a writing application for selecting a random pen from a plurality of pens and selecting a random background material from a plurality of background materials, and the present invention may receive selections for the pen and the background material by using the writing application and combine haptic patterns of the selected pen and background material.

The term "storage unit" includes the storage unit 175, the ROM 112 and the RAM 113 within the controller 110, or a memory card (for example, an SD card or a memory stick) mounted to the portable terminal 100. The storage unit 175 may include a nonvolatile memory, a volatile memory, a Hard Disk Drive (HDD), or a Solid State Drive (SSD).

Further, the storage unit 175 can store applications having various functions such as, for example, a navigation function, a video phone call function, a game function, and an alarm application based on the time, images for providing a Graphical User Interface (GUI) related to the applications, databases or data related to a method of processing user information, a document, and a touch input, background images (a menu screen, an idle screen or the like) or operating programs required for driving the portable terminal 100, and images photographed by the camera module 150. The storage unit 175 is a machine (for example, computer-readable medium), and the term "the machine readable medium" can be defined as a medium providing data to the machine such that the machine performs a specific function. The machine-readable medium may be a storage medium. The storage unit 175 may include a non-volatile medium and a volatile medium. Both media should be tangible so that commands transmitted through the media can be detected by a physical mechanism reading the commands through the machine.

The machine-readable medium includes at least one of a floppy disk, a flexible disk, a hard disk, a magnetic tape, a Compact Disc Read-Only Memory (CD-ROM), an optical disk, a punch card, a paper tape, a RAM, a Programmable Read-Only Memory (PROM), an Erasable PROM (EPROM), and a flash-EPROM, but is not limited thereto.

The power supplier 180 can supply power to one battery or a plurality of batteries arranged in the housing of the portable terminal 100, according to a control of the controller 110. The one battery or the plurality of batteries supply power to the portable terminal 100. Further, the power supplier 180 can supply power input from an external power source through a wired cable connected to the connector 165 to the portable terminal 100. In addition, the power supplier 180 can supply power wirelessly input from the external power source through a wireless charging technology to the portable terminal 100.

Further, the portable terminal 100 may include at least one touch screen providing user graphic interfaces corresponding to various services (for example, a phone call, data transmission, broadcasting, and photography) to the user. Each touch screen can transmit an analog signal corresponding to at least one touch input into the user interface to the corresponding touch screen controller. As described above, the portable terminal 100 may include a plurality of touch screens, and each of the touch screens may include a touch screen controller receiving an analog signal corresponding to a touch. The touch screens may be connected with a plurality of housings through hinge connections, respectively, or the plurality of touch screens may be located at one housing without the hinge connection. The portable terminal 100, according to an embodiment of the present invention, may include at least one touch screen as described above, and one touch screen will be described hereinafter for convenience of the description.

The touch screen 190 can receive at least one touch through a user's body (for example, fingers) or a touchable input unit (for example, a stylus pen or an electronic pen). Further, when an input is made using the pen such as the stylus pen or the electronic pen, the touch screen 190 includes a pen recognition panel 191. The pen recognition panel 191 can detect a distance between the pen and the touch screen 190 through a magnetic field. In addition, the touch screen 190 can receive successive motions of at least one touch. The touch screen 190 can transmit an analog signal corresponding to successive motions of the input touch to the touch screen controller 195.

The touch used in the present invention is not limited to a contact between the touch screen 190 and the user's body or the touchable input unit, and may include a noncontact (for example, at an interval of about 5 mm) which can be detected without the contact between the touch screen 190 and the user's body or the touchable input unit. The interval which can be detected by the touch screen 190 may be changed according to a capability or a structure of the portable terminal 100. Particularly, the touch screen 190 is configured to output different values (for example, including a voltage value or a current value which is an analog value) detected by a touch event and a hovering event so that the direct touch event by a contact with the user's body or the touchable input unit and an input event (for example, the hovering event) in a noncontact state can be distinguishably detected. Further, it is preferable that the touch screen 190 differently outputs detected values (for example, a current value or the like) according to a distance between a space where the hovering event is generated and the touch screen 190.

The touch screen 190 can be implemented in, for example, a resistive type, a capacitive type, an infrared type, or an acoustic wave type.

Further, the touch screen 190 includes two or more touch screen panels which can detect touches or approaches of the user's body and the touchable input unit in order to sequentially or simultaneously receive inputs by the user's body and the touchable input unit. The two or more touch panels provide different output values to the touch screen controller, and the touch screen controller can recognize the different values input into the two or more touch screen panels to distinguish whether the input from the touch screen 190 is an input by the user's body or an input by the touchable input unit.

For example, the touch screen 190 may be formed with a structure in which a panel detecting an input through the finger or the input unit 168 by a change in induced electromotive force and a panel detecting a contact of the touch screen 190 through the finger or the input unit 168 adhere to each other or are sequentially stacked with a partial separation from each other. The touch screen 190 includes a plurality of pixels and displays an image through the pixels. The touch screen 190 may use an LCD, an OLED, an LED, and the like.

Further, the touch screen 190 includes a plurality of sensors detecting, when the finger or the input unit 168 contacts a surface of the touch screen 190 or is placed within a predetermined distance from the touch screen 190, a position where the finger or the input unit 168 contacts or is placed. Each of the plurality of sensors may be formed in a coil structure. In a sensor layer consisting of the plurality of sensors, the respective sensors have preset patterns and form a plurality of electrode lines. When the contact is generated on the touch screen 190 through the finger or the input unit 168, a detection signal having a waveform changed due to capacitance between the sensor layer and the input means is generated by such a structure, and the touch screen 190 transmits the generated detection signal to the controller 110. A predetermined distance between the input unit 168 and the touch screen 190 may be detected through an intensity of a magnetic field formed by a coil 430. Hereinafter, a process of setting the vibration intensity will be described.

The touch screen controller 195 converts an analog signal received from the touch screen 190 to a digital signal (for example, X and Y coordinates) and transmits the digital signal to the controller 110. The controller 110 can control the touch screen 190 by using the digital signal received from the touch screen controller 195. For example, the controller 110 can allow a short-cut icon or an object displayed on the touch screen 190 to be selected or executed in response to a touch event or a hovering event. Further, the touch screen controller 195 may be included in the controller 110.

Furthermore, the touch screen controller 195 can identify a distance between a space where the hovering event is generated and the touch screen 190 by detecting a value (for example, a current value or the like) output through the touch screen 190, convert the identified distance value to a digital signal (for example, a Z coordinate), and then provide the converted digital signal to the controller 110.

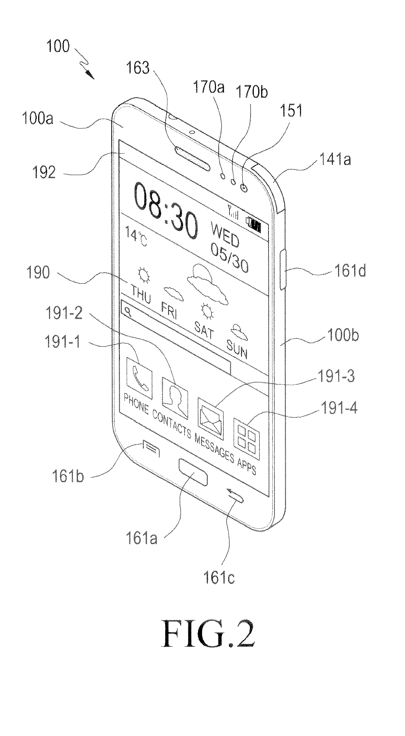

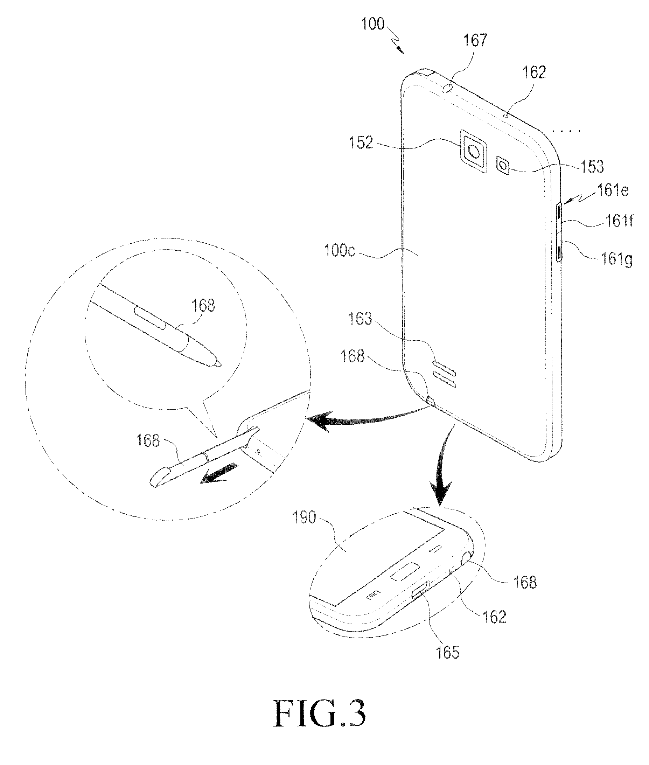

FIG. 2 is a diagram illustrating a front perspective view of the portable terminal, according to an embodiment of the present invention, and FIG. 3 is a diagram illustrating a rear perspective view of the portable terminal, according to an embodiment of the present invention.

Referring to FIGS. 2 and 3, the touch screen 190 is disposed in a center of a front surface 100a of the portable terminal 100. The touch screen 190 may have a large size to occupy most of the front surface 100a of the portable terminal 100. FIG. 2 shows an example where a main home screen is displayed on the touch screen 190. The main home screen is a first screen displayed on the touch screen 190 when power of the portable terminal 100 is turned on. Further, when the portable terminal 100 has different home screens of several pages, the main home screen may be a first home screen of the home screens of several pages. Short-cut icons 191-1, 191-2, and 191-3 for executing frequently used applications, a main menu switching key 191-4, time, weather and the like may be displayed on the home screen. The main menu switching key 191-4 displays a menu screen on the touch screen 190. Further, a status bar 192, which displays a status of the portable terminal 100, such as a battery charging status, a received signal intensity, and a current time, may be formed on an upper end of the touch screen 190.

A home button 161 a, a menu button 161b, and a back button 161c are formed on a lower end of the touch screen 190.

The home button 161a displays the main home screen on the touch screen 190. For example, when the home button 161a is touched in a state where a home screen different from the main home screen or the menu screen is displayed on the touch screen 190, the main home screen is displayed on the touch screen 190. Further, when the home button 161a is touched while applications are executed on the touch screen 190, the main home screen shown in FIG. 2 may be displayed on the touch screen 190. In addition, the home button 161a may be used to display recently used applications or a task manager on the touch screen 190.

The menu button 161b may provide a connection menu which can be used on the touch screen 190. The connection menu includes a widget addition menu, a background changing menu, a search menu, an editing menu, an environment setting menu and the like.

The back button 161c can display the screen which was executed just before the currently executed screen, or can end the most recently used application.

The first camera 151, a luminance sensor 170a, and a proximity sensor 170b are disposed on edges of the front surface 100a of the portable terminal 100. The second camera 152, the flash 153, and the speaker 163 may be disposed on a rear surface 100c of the portable terminal 100.

A power/reset button 161d, a volume button 161e (with increase and decrease volume buttons 161 f and 161g), a terrestrial DMB antenna 141a for broadcasting reception, and one or a plurality of microphones 162 are disposed on a side surface 100b of the portable terminal 100. The DMB antenna 141a may be fixed to the portable terminal 100 or may be formed to be detachable from the portable terminal 100.

Further, the connector 165 is formed on a side surface of a lower end of the portable terminal 100. A plurality of electrodes are formed in the connector 165, and the connector 165 can be connected with an external device through a wire. The earphone connecting jack 167 is formed on a side surface of an upper end of the portable terminal 100. Earphones may be inserted into the earphone connecting jack 167.

In addition, the input unit 168 is formed on a side surface of a lower end of the portable terminal 100. The input unit 168 can be inserted into the portable terminal 100 to be stored in the portable terminal 100, and withdrawn and separated from the portable terminal 100 when it is used.

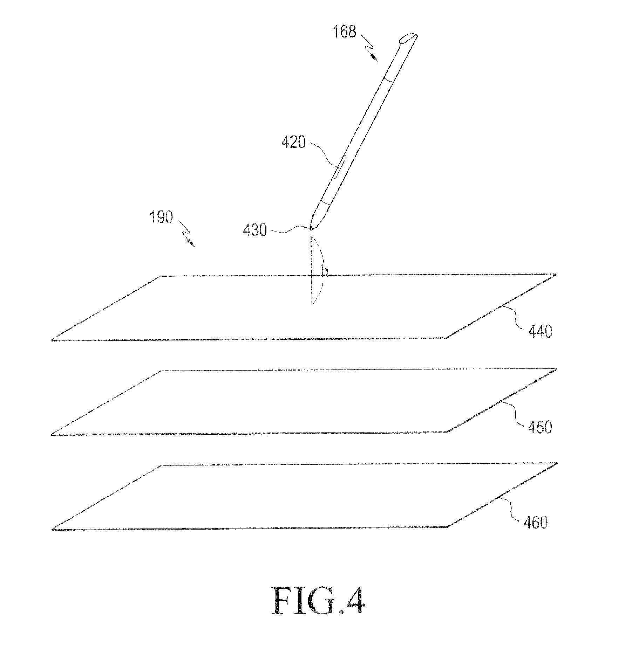

FIG. 4 is diagram illustrating a cross-sectional view of the inside of the input unit and the touch screen, according to an embodiment of the present invention.

As illustrated in FIG. 4, the touch screen 190 includes a display panel 450, a first touch panel 440, and a second touch panel 460. The display panel 450 may be a panel such as an LCD, an Active Matrix Organic Light Emitting Diode (AMOLED) or the like, and displays various operation states of the portable terminal 100, various images according to an application execution and a service, and a plurality of objects.

The first touch panel 440 is a capacitance type touch panel, which is produced by coating both sides of glass with a thin metal conductive material (for example, an Indium Tin Oxide (ITO) film) to allow a current to flow on a surface of the glass and thus is coated with a dielectric that can store a charge. When an input unit (for example, a user's finger or a pen) is touched on a surface of the first touch panel 440, a predetermined amount of charges is moved to the touched position by static electricity, and the first touch panel 440 recognizes a changed amount of the current according to the movement of the charges to detect the touched position. Through the first touch panel 440, all types of touches which can generate static electricity can be detected and a touch of a finger or a pen which corresponds to the input unit can be detected.

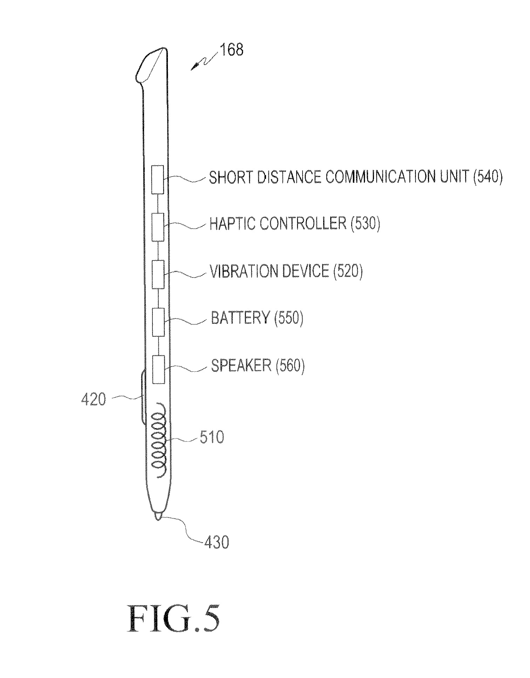

The second touch panel 460 is an Electronic Magnetic Resonance (EMR) type touch panel, and includes an electromagnetic induction coil sensor in which a plurality of loop coils are arranged in a predetermined first direction and a second direction crossing the first direction in a grid structure and an electronic signal processor sequentially providing an alternative current signal having a predetermined frequency to each of the loop coils of the electromagnetic induction coil sensor. When the input unit 168 having a resonance circuit therein exists near the loop coil of the second touch panel 460, a magnetic field transmitted from the corresponding loop coil generates a current based on mutual electromagnetic induction in the resonance circuit within the input unit 168. Further, based on the current, an induced magnetic field is generated from a coil included in the resonance circuit within the input unit 168 and the second touch panel 460 detects the induced magnetic field from the loop coil in a signal reception state to detect a hovering position and a touch position of the input unit 168, and the portable terminal 100 detects a height h from the first touch panel 450 to a nib 430 of the input unit 168. It may be easily understood by those skilled in the art that the height h from the first touch panel 450 of the touch screen 190 to the nib 430 is changed according to a capability or a structure of the portable terminal 100. A hovering or a touch of the input unit which can generate a current based on electromagnetic induction can be detected through the second touch panel 460, and it will be described that the second touch panel 460 is used mainly for detecting the hovering or touch of the input unit 168. Further, the input unit 168 may also be referred to as an electromagnetic pen or an ((EMR pen. In addition, the input unit 168 may be different from a general pen which does not include the resonance circuit detected through the first touch panel 440. The input unit 168 may include a button 420 which can change an electromagnetic induction value generated by a coil arranged within a penholder in an area adjacent to the nib 430. A detailed description of the input unit 168 is described in greater detail below with reference to FIG. 5.

Further, the touch screen controller 195 may include a first touch panel controller and a second touch panel controller. The first touch panel controller converts an analog signal received from the first touch panel 440 by a detection of a touch of a finger or a pen to a digital signal (for example, X, Y, and Z coordinates) and transmits the converted digital signal to the controller 110. Further, the second touch panel controller converts an analog signal received from the second touch panel 460 by a detection of a hovering or a touch of the input unit 168 to a digital signal and transmits the converted digital signal to the controller 110. In addition, the controller 110 can control the display panel 450, the first touch panel 440, and the second touch panel 460 by using the digital signals received from the first and second touch panel controllers, respectively. For example, the controller 110 can display a screen having a predetermined shape on the display panel 450 in response to the hovering or the touch of the finger, the pen, or the input unit 168.

According to the portable terminal 100 in an embodiment of the present invention, the first touch panel can detect the touch of the user's finger or the pen and the second touch panel can detect the hovering or the touch of the input unit 168. Accordingly, the controller 110 of the portable terminal 100 can distinguishably detect the touch of the user's finger or the pen and the hovering or the touch of the input unit 168. Further, although FIG. 4 illustrates only one touch screen, the present invention is not limited to one touch screen and may includes a plurality of touch screens. Moreover, the touch screens are included in housings, respectively, and connected with each other by hinges, or one housing may include a plurality of touch screens. Furthermore, each of the plurality of touch screens includes the display panel and at least one touch panel as illustrated in FIG. 4.

FIG. 5 is a block diagram of the input unit providing a haptic effect, according to an embodiment of the present invention.

Referring to FIG. 5, the input unit 168, according to an embodiment of the present invention, includes the nib 430 arranged at an end of the penholder, and the button 420 that can change an electromagnetic induction value generated by a coil 510 arranged within the penholder in an area adjacent to the nib 430. The input unit 168 also includes a vibration device 520 that vibrates when a hovering input effect is generated, a haptic controller 530 that analyzes a control signal received from the portable terminal 100 by hovering with the portable terminal 100 and controls a vibration intensity and a vibration cycle of the vibration device 520 in order to provide a haptic effect to the input unit 168 according to the analyzed control signal. The input unit 168 further includes a short distance communication unit 540 that performs short distance communication with the portable terminal 100, and a battery 550 that supplies power for the vibration of the input unit 168. Further, the input unit 168 includes a speaker 560 that outputs a sound corresponding to the vibration cycle and/or the vibration intensity of the input unit 168. The speaker 560 can output sounds corresponding to haptic effects provided to the input unit 168 to the speaker 163 included in the portable terminal 100 simultaneously or before/after a predetermined time (for example, 10 ms).

For example, the speaker 560 can output sounds corresponding to various signals (for example, a radio signal, a broadcasting signal, a digital audio file, a digital video file and the like) from the mobile communication module 120, the sub communication module 130, or the multimedia module 140 included in the portable terminal 100, according to a control of the haptic controller 530. The speaker 560 outputs a sound corresponding to a haptic pattern in accordance with the control signal analyzed by the haptic controller 530. The haptic pattern includes a haptic pattern of a selected pen, a haptic pattern of a background material on which writing is made using the selected pen, or a haptic pattern generated by combining the haptic pattern of the selected pen and the haptic pattern of the background material. Further, the speaker 560 can output a sound corresponding to a pattern that corresponds to a preview through which various haptic patterns can be shown in advance.

In addition, the speaker 560 can output a sound (for example, button tone corresponding to phone call or ringing tone) corresponding to a function performed by the portable terminal 100, and one or more speakers 560 may be formed at proper positions of the housing of the input unit 168.

When the nib 430 contacts the touch screen 190 or is placed on a position (for example, 5 mm) where hovering can be detected, the haptic controller 530 analyzes at least one control signal received from the portable terminal 100 through the short distance communication unit 540 and controls a vibration cycle, a vibration intensity or the like of the vibration device 520 included in the input unit 168 in accordance with the analyzed control signal. The short distance communication unit 540 and the vibration device 520 are activated before the control signal is received. Further, the control signal is a signal transmitted by the portable terminal 100 and is received from the portable terminal periodically or aperiodically during a predetermined time or until a time when a touch on a character or a picture using the input unit ends. For example, when the nib 430 contacts the touch screen 190 to input the character or draw the picture, the portable terminal 100 transmits control signals including a haptic pattern predetermined for the pen and a haptic pattern predetermined for the background material, respectively, to the input unit 168, or transmits a control signal including a haptic pattern generated by combining the haptic pattern predetermined for the pen and the haptic pattern predetermined for the background material to the short distance communication unit 540 included in the input unit 168. The input unit 168 analyzes the control signal received from the portable terminal 100. Further, the input unit 168 analyzes the haptic pattern of the pen, the haptic pattern of the background material on which writing is made by the pen, or the haptic pattern generated by combining the haptic pattern of the pen and the haptic pattern of the background material, and controls the vibration device 520 to output a result of the analysis. Moreover, the input unit 168 can output a sound corresponding to the result of the analysis through the speaker 560. Furthermore, the input unit 168 can control the vibration of the vibration device in accordance with reception of the control signal corresponding to a preview of the haptic pattern of the pen, the haptic pattern of the background material, or the haptic pattern generated by combining the haptic pattern of the pen and the haptic pattern of the background material and output the sound through the speaker 560.

In addition, the control signal is transmitted to the input unit 168 by at least one of the mobile communication module 120 and the sub communication module 130 of the portable terminal 100. Further, the control signal includes at least one of information for activating the vibration device, information on the vibration intensity of the input unit 168, information for deactivating the vibration device of the input unit 168, and information on total time during which the haptic effect is provided. Further, since the control signal has a size of about 8 bits and is repeatedly transmitted on every predetermined cycle (for example, 5 ms) to control the vibration of the input unit 168, the user can recognize that the vibration according to the haptic effect is repeatedly performed on a predetermined cycle. For example, the control signal may include information shown in Table 1 below.

Table 1

| Field | Activation of vibration device | Vibration intensity | Deactivation of vibration device |
|---|---|---|---|
| information | 1 | 125 125 131 131 0 | 2 |

As shown in Table 1, the control signal may include information for activating the vibration device 520 of the input unit, information on the vibration intensity of the vibration device 520, and information for deactivating the vibration device 520. Further, the control signal may be transmitted to the input unit 168 in the unit of 5 ms, but it is only an embodiment and transmission of the control signal may vary depending on the cycle of the haptic pattern. In addition, the transmission cycle, the vibration intensity, and the transmission term of the control signal may be also variable. The transmission cycle, the vibration intensity, and the transmission term vary depending on a pen type and/or a background material type. The transmission term may be a term up to a time when a temporary touch or successive touches on the touch screen 190 by the input unit 168 end.

The input unit 168 having such a configuration supports an electrostatic induction type. When a magnetic field is formed in a predetermined position of the touch screen 190 by the coil 510, the touch screen 190 is configured to detect the position of the corresponding magnetic field to recognize a touch position.

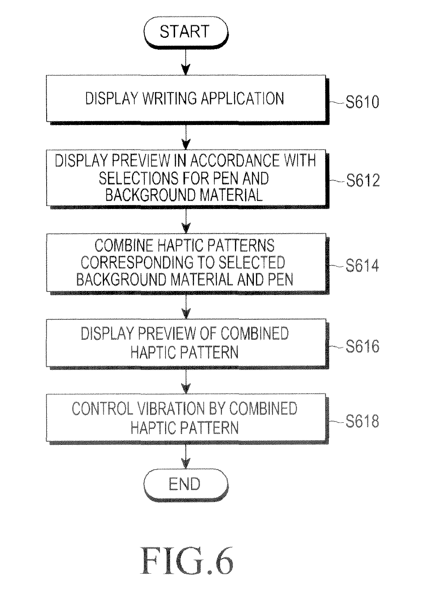

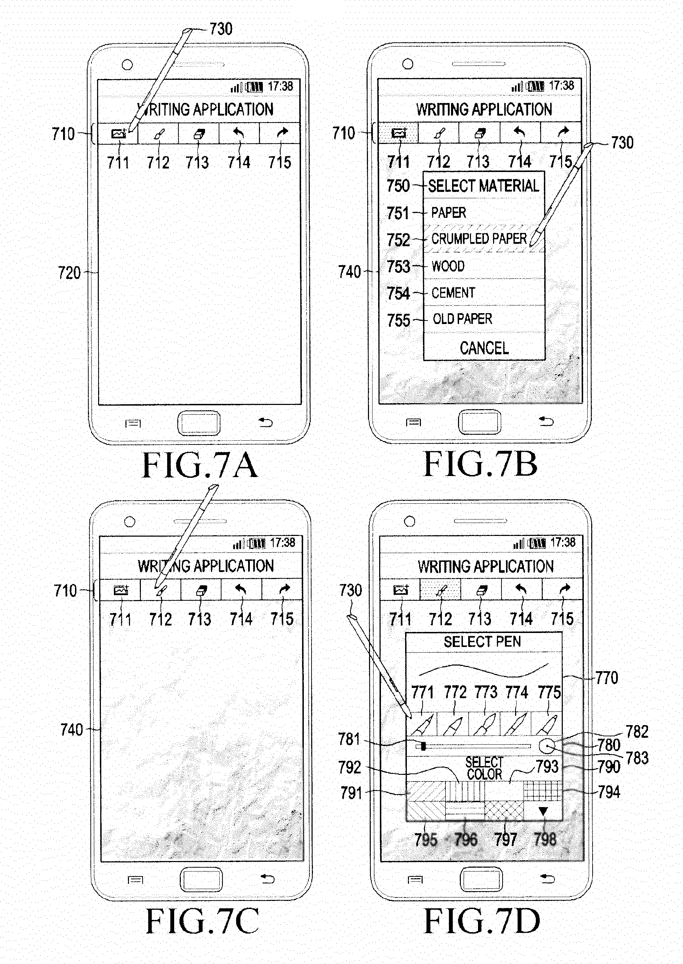

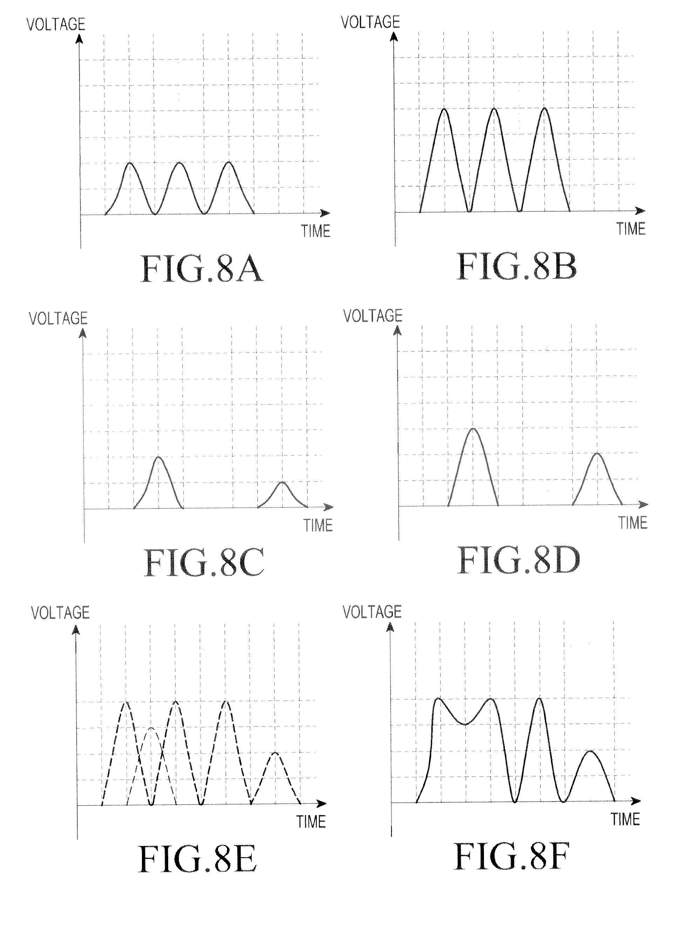

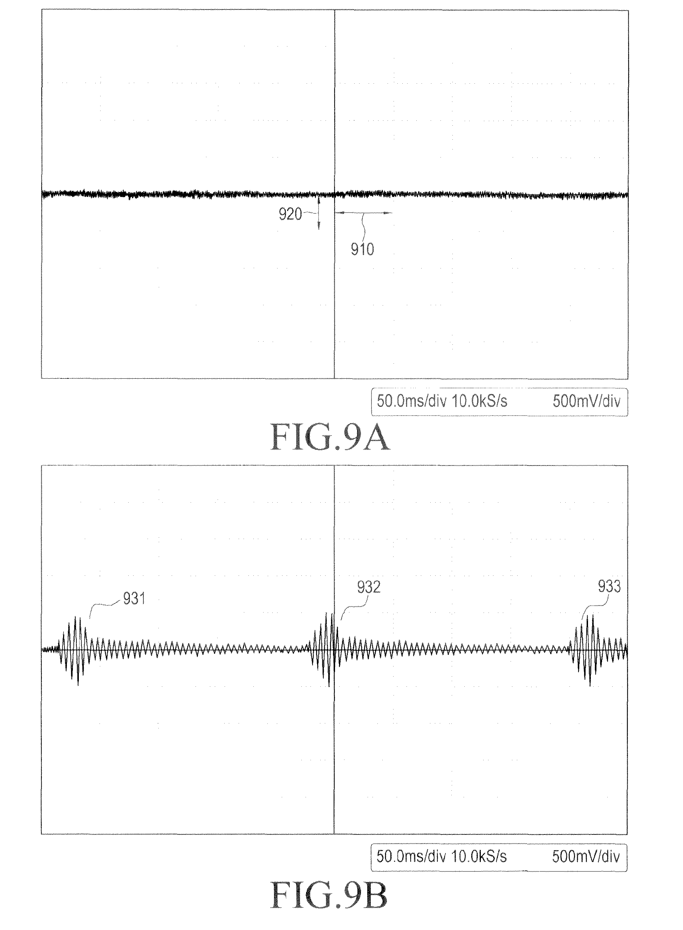

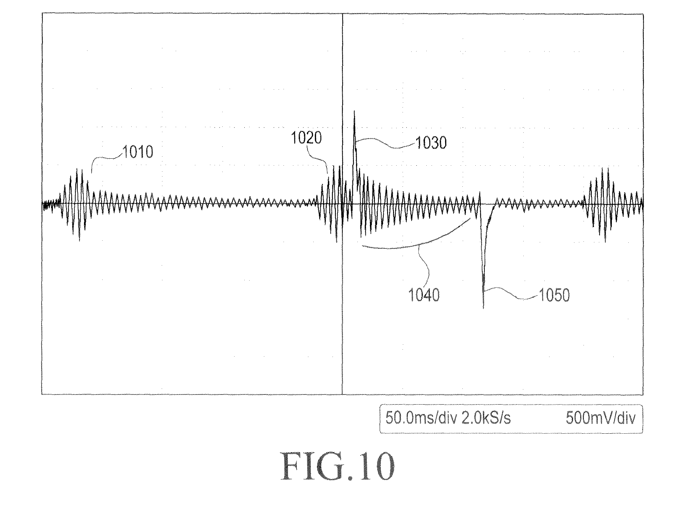

FIG. 6 is a flowchart illustrating a method of providing a haptic feedback in accordance with a type of the pen and a type of the background material, according to an embodiment of the present invention. FIGS. 7A to 7F are diagrams illustrating selection of the pen and the background material to perform writing by using the pen, according to an embodiment of the present invention. FIGS. 8A to 8F are diagrams illustrating the combining of haptic waveforms of the selected pen and background material, according to an embodiment of the present invention. FIGS. 9A to 9J show waveforms of a haptic pattern according to various pens and background materials, according to embodiments of the present invention. FIG 10 shows a waveform of a haptic pattern when characters are written on crumpled paper by using a ballpoint pen, according to an embodiment of the present invention.

Hereinafter, a method of providing a haptic feedback in accordance with a pen type and a background material type, according to an embodiment of the present invention, are described in detail with reference to FIGS. 6 to 8F.

An application for selecting the pen and the background material is executed, in step S610. The application corresponds to a writing application for receiving a selection for the pen that the user desires to use for the writing from a plurality of pens provided by the application, and for selecting the background material on which a character is written or a picture is drawn by using the selected pen. According to an embodiment of the present invention, the pen and the background material may be selected through the execution of the writing application or selected without the execution of the writing application. The background corresponds to something on which the character or the picture made by the pen is displayed, and includes a background having a paper material, a background having a crumpled paper material, a background having a wood material, a background having a cement material, a background having an old paper material, and a background having a cloth material. Further, it is apparent that embodiments of the present invention include various materials that are writable and exist in real life as well as the above listed background materials. The writing application can select a color and a thickness of the pen to be applied to the selected pen as well as the selection of the pen. According to an embodiment of the present invention, the selection for the pen and the background material may be separately provided by the application or provided by an environment setting of the portable terminal. For example, referring to FIG. 7A, the writing application includes a menu bar 710 providing various functions, and the menu bar 710 includes a background menu 711 for selecting the background material to be applied among a plurality of backgrounds, a pen selection menu 712 for selecting a random pen from a plurality of pens to write a character or draw a picture on the selected background, an erase menu 713 erasing the written character or drawn picture, a return menu 714 returning the written character or drawn picture, and a restoration menu 715 restoring erased contents. A random menu among the provided menus may be selected by an input unit 730. The input unit 730 has the configuration as illustrated in FIG. 5, and the reference numerals shown in FIG. 5 are used for components of the input unit 730. Further, the application includes a screen 720 displaying the character or picture made by the pen. The screen 720 is displayed in accordance with the selected pen and background material, and the character or the picture is displayed in a progress direction of the input unit. Further, the screen 720 displays waveforms according to each background material type and each pen type, and a waveform generated by combining the waveforms of the background material and the pen, according to an embodiment of the present invention.

Referring to FIGS. 9A to 9J, FIG 9A shows a waveform of a haptic pattern when the background material is general paper, according to an embodiment of the present invention. As illustrated in FIG. 9A, a horizontal axis (an X axis) indicates a time and a vertical axis (a Y axis) indicates a voltage. One box 710 of the horizontal axis corresponds to 50 ms, and one box 920 of the vertical axis corresponds to 500 mV. A waveform of the haptic pattern has a uniform characteristic because general paper is characteristically smooth.

In step S612, a preview is displayed in accordance with selections for the background material and the pen in a state where an application is displayed. Referring to FIG. 7B, when the background menu 711 for selecting the background material is selected using the input unit 730, a material selection window 750 for selecting a random background material from a plurality of background materials is displayed. The material selection window 750 includes a paper background 751, a crumpled paper background 752, a wood background 753, a cement background 754, and an old paper background 755. It is apparent that embodiments of the present invention include various background materials on which the writing can be made in addition to the above listed background materials. Further, according to an embodiment of the present invention, when a random background material is selected from the plurality of background materials by the input unit, the selected background material may be displayed through a preview. In addition, according to an embodiment of the present invention, a control signal corresponding to the preview is generated and then transmitted to the input unit. The control signal corresponding to the preview may vary depending on the background material. When a background material is selected through the application, the controller 110 reads a haptic pattern corresponding to the background material from the storage unit 175. For example, when the crumpled paper background 752 is selected using the input unit 730, the controller 110 reads a predetermined haptic pattern corresponding to the crumpled paper from the storage unit 175 and sets the crumpled paper as the background material on the screen 740. A waveform of the crumpled paper is as illustrated in FIG. 9B.

FIG. 9B is a waveform of a predetermined haptic pattern when the background material is crumpled paper, according to an embodiment of the present invention. The waveform of the haptic pattern when the crumpled paper is selected has gradually increasing vibrations between 0 V and 1V for about 20 ms, vibrations of 300 mV for 10 ms after about 20 ms, and gradually decreasing vibrations for 200 ms. The haptic pattern is generated in accordance with a degree of wrinkles of the paper. That is, a cycle becomes shorter when the degree of wrinkles is high, and a cycle becomes longer when the degree of wrinkles is low. Providing again the initially provided vibrations (that is, gradually increasing vibrations between 0 V and 1V for about 20 ms) allows the user to feel a haptic effect corresponding to the crumpled paper. Such a cycle (about 230 ms) is made based on the degree of the wrinkles of the paper. A horizontal axis (X axis) in FIG. 9B denotes a time axis indicating a vibration time and has a unit of 50 ms. A vertical axis (Y axis) denotes a vibration intensity and has a unit of 500 mV. However, the waveform of the haptic pattern when the crumpled paper is selected, according to an embodiment of the present invention, is not limited to FIG. 9B. According to the present invention, various waveforms having different intensities are stored in addition to the waveform illustrated in FIG. 9B, and another haptic pattern may be generated through a combination of the pre-stored waveforms and then the generated haptic pattern may be stored.

A random pen is selected from a plurality of pens, in step S612.

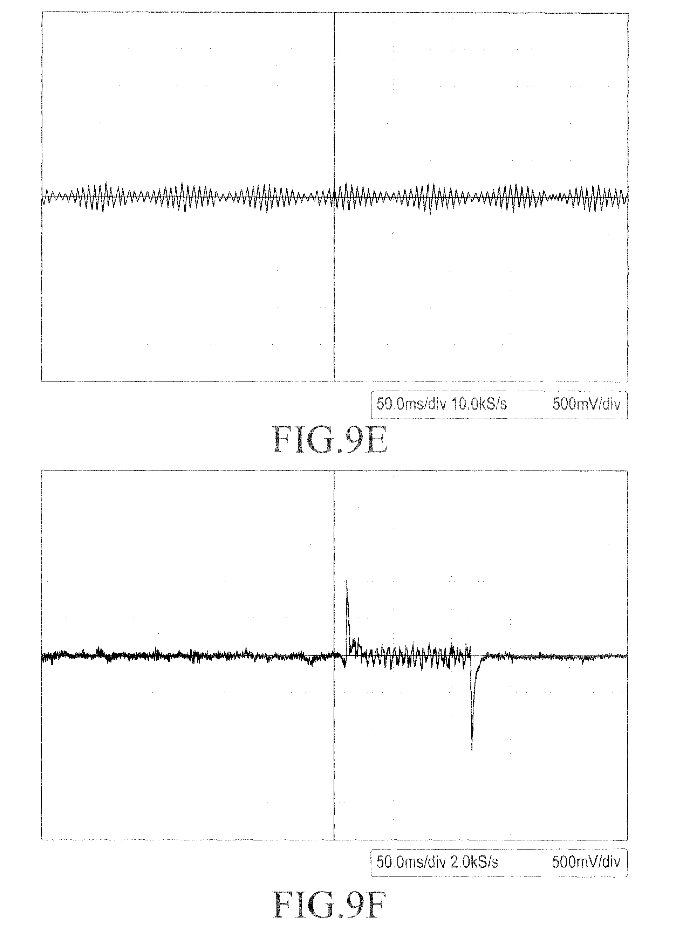

Referring to FIG. 7D, when the menu 712 for selecting the pen is selected using the input unit 730, a pen selection window 770 for selecting a random pen from a plurality of pens is displayed. The pen selection window 770 includes a ballpoint pen 771, a pencil 772, a brush 773, a fountain pen 774, and a marker 775. It is apparent that embodiments of the present invention include various pens capable of writing in addition to the above listed pens. Further, according to embodiments of the present invention, when a random pen is selected from a plurality of pen types by the input unit, the selected pen may be displayed through a preview. According to embodiments of the present invention, a control signal corresponding to the preview may be generated and then transmitted to the input unit. The control signal corresponding to the preview may vary depending on the pen type. When a pen is selected by the input unit 730 in a state where the application is displayed, the controller 110 reads a haptic pattern corresponding to the selected pen from the storage unit 175. For example, when the ballpoint pen 771 is selected using the input unit 730, a predetermined haptic pattern corresponding to the selected ballpoint pen is read from the storage unit 175. Further, according to the present invention, through the pen selection window 770, a line thickness of the selected pen may be controlled and a color may be selected as well as the selection for the pen. The plurality of pen types are listed on the pen selection window 770, and a random pen (for example, the ballpoint pen 771) is selected from the plurality of listed pen types by the input unit 730. When it is desired to apply a thickness to the selected pen, the thickness is controlled through a thickness control menu 780. The thickness control menu 780 displays a movement bar 781 moving to control the thickness and a thickness 783 controlled by the movement of the movement bar 781 on an area 782. Further, a color selection menu 790 includes various colors 791 to 797 listed therein. In addition, according to an embodiment of the present invention, various colors are provided as well as seven colors (for example, red 791, orange 792, yellow 793, green 794, blue 795, navy 796, and violet 797). When the user desires more colors, the user selects a menu 798. When the ballpoint pen is selected from the pen selection window 770 as the pen type, a waveform of the selected ballpoint pen is as illustrated in FIG. 9F.

FIG. 9F is a waveform of the predetermined haptic pattern when the pen is the ballpoint pen, according to an embodiment of the present invention. When the ballpoint pen is selected, the waveform of the haptic pattern has vibrations of about 1V, vibrations of 300 mV again for 100 ms, and vibrations of about 1.3 V thereafter, so that the user feels a haptic effect as if the user writes actually by using the ballpoint pen. A horizontal axis (X axis) in FIG. 9F is a time axis indicating a vibration time and has a unit of 50 ms. A vertical axis (Y axis) indicates a vibrations intensity and has a unit of 500 mV. The waveform of the haptic pattern when the ballpoint pen is selected, according to an embodiment of the present invention, is not limited to FIG 9F. According to embodiments of the present invention, various waveforms having different cycles and intensities are stored in addition to the waveform illustrated in FIG. 9F, and another haptic pattern may be generated through a combination of the pre-stored waveforms and then the generated haptic pattern may be stored.

The waveform of the haptic pattern predetermined for the selected background material and the waveform of the haptic pattern predetermined for the selected pen are combined, in step S614 of FIG. 6. The combination of a waveform of a predetermined haptic pattern according to a pen type and a waveform of a predetermined haptic pattern according to a background material type is calculated using Equation (1) below and the combination is illustrated in FIGS. 8A to 8F.

$$Y = \alpha \cdot a(t) + \beta \cdot b(t) \qquad \qquad \dots\dots\dots\dots\dots (1)$$

In Equation (1), a(t) denotes a waveform of a haptic pattern according to a pen type, and b(t) denotes a waveform of a haptic pattern according to a background material type. α and β denote parameters according to the pen type and the background material type, which arc variable. In general, α may have a value larger than 0 and smaller than 3, and β may also have a value larger than 0 and smaller than 3. α and β may be determined according to the pen type and the background material type or determined by the user. For example, α may have a larger value as a nib (or a tip) of the pen type is thinner, and β may have a larger value as a surface of the background material is rougher.

FIG. 8A illustrates a waveform of a haptic pattern predetermined for the pen, according to an embodiment of the present invention, and FIG. 8B illustrates a waveform after the waveform of FIG. 8A is multiplied by the parameter α. Referring to FIG. 8B, a cycle of the waveform in FIG. 8B is the same as that of the waveform in FIG. 8A, but the parameter α has a value of 2. As described above, by multiplying the parameter and the waveform of the pen, a voltage is double the waveform that is not multiplied by the parameter. FIG. 8C illustrates a waveform of a haptic pattern predetermine for the background material, according to an embodiment of the present invention, and FIG. 8D illustrates a waveform after the waveform in FIG. 8C is multiplied by the parameter β. Referring to FIG. 8D, a cycle of the waveform in FIG. 8D is the same as that of the waveform in FIG. 8C, but the parameter β has a value of 1.5. As described above, by multiplying the parameter and the waveform of the background material, a voltage increases by the parameter in comparison with the waveform that is not multiplied by the parameter.

FIG. 8E shows the combining of the waveforms in FIGS. 8B and 8D, and FIG. 8F illustrates a result of the combination of the waveform of the haptic pattern predetermined for the pen and the waveform of the haptic pattern predetermined for the background material. FIGS. 8A to 8F are embodiments of the present invention, and a waveform generated by combining the waveforms of the haptic patterns of the pen and the background material may vary depending on each pen type and each background material.

A preview of the haptic pattern combined in step S614 is displayed on the touch screen, in step S616 of FIG. 6. According to an embodiment of the present invention, a predetermined haptic pattern for each pen type may be displayed on the touch screen through a preview or a predetermined haptic pattern for each background material type may be displayed on the touch screen through a preview. Alternatively, a preview corresponding to selections for the pen type and the background material type may be displayed on the touch screen, and a control signal corresponding to the preview may be generated and then transmitted to the input unit. The control signal corresponding to the preview may vary depending on a pen type, a background material type, or a haptic pattern combined according to the selections for the pen and the background material, and the control signal may be transmitted to the input unit.

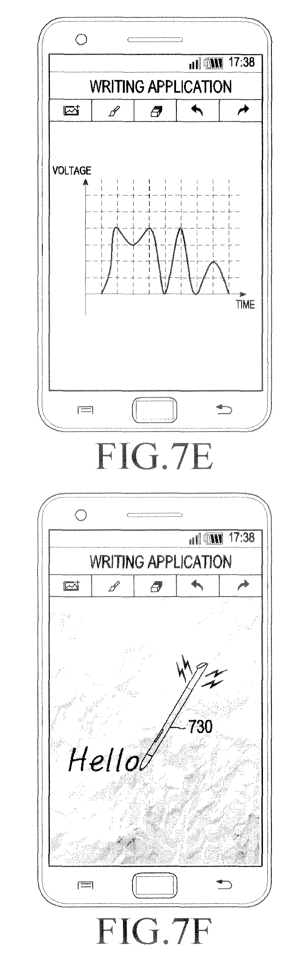

FIG. 7E is a diagram illustrating the displaying of a waveform generated by combining the haptic waveform of the pen selected in FIG. 7B and the haptic waveform of the background material selected in FIG. 7D through a preview. FIG. 8F is a result generated by combining the voltage in FIG. 8B and the voltage in FIG. 8D for each same time zone. The preview slows, in advance, the haptic pattern of the selected pen, the haptic pattern of the background material, or the combined haptic pattern, and may be displayed on the touch screen before a portable terminal or the input unit vibrates in accordance with the haptic pattern. Further, the control signal corresponding to the preview may be transmitted to the input unit, and the input unit having received the control signal may allow the portable terminal to output the same vibration as a haptic feedback corresponding to the preview

Further, the haptic pattern combined in step S614 is provided as a haptic feedback, in step S618 of FIG. 6. The haptic feedback provides a vibration of the haptic pattern to the portable terminal, and the controller 110 controls a vibration of the vibration motor 164 in accordance with a voltage of the combined haptic pattern.

FIG. 7F is a diagram illustrating the inputting of characters into the background material selected in FIG. 7D by using the pen selected in FIG. 7B. When "Hello" is input using the input unit 730 in a state where crumpled paper and a ballpoint pen are selected, the portable terminal vibrates in accordance with a waveform of a haptic pattern generated by combining a haptic pattern of the crumpled paper and a waveform of a haptic pattern of the ballpoint pen. For example, when writing is made on the touch screen by using the input unit 730, the portable terminal 100 combines a haptic pattern corresponding to a pen type applied to the input unit 730 and a haptic pattern corresponding to a background material on which the writing is made using the pen and generates at least one control signal for providing a haptic feedback to the portable terminal 100 and the input unit 730 based on the combined haptic pattern. The generated control signal may include information for outputting a sound corresponding to the combined haptic pattern as well as information on a vibration of the combined haptic pattern. Further, the portable terminal 100 controls the vibration motor 164 through the generated control signal and then vibrates. The portable terminal 100 outputs the sound corresponding to the combined haptic pattern through the speaker 163. The portable terminal transmits the control signal corresponding to the combined haptic pattern to the input unit 730. The input unit 730 having received the control signal analyzes the received control signal and vibrates in accordance with the waveform of the combined haptic pattern. The input unit 730 analyzes at least one control signal received from the portable terminal 100 and controls at least one of' a vibration cycle and a vibration intensity of the vibration device 520 included in the input unit 730 in accordance with the analyzed control signal. Further, the input unit 730 outputs the sound corresponding to the combined haptic pattern through the speaker 560.

As illustrated in FIG 10, a waveform of a haptic pattern when crumpled paper is selected has gradually increasing vibrations 1010 between 0V and 1V for about 20 ms, vibrations of 300 mV for 10 ms after about 20 ms, and gradually decreasing vibrations of 200 ms. Subsequently, the waveform has gradually increasing vibrations 1020 between 0 V and 1 V for 20 ms, gradually decreasing vibrations, and then vibrations of 1.3 V. This is because the waveform of the haptic pattern of the crumpled paper is combined with the waveform of the haptic pattern of the ballpoint pen. After the vibrations of 1.3 V, vibrations 1040 gradually decreasing from 1.3 V to 200 mV are generated. Then, vibrations of 1.4 V are generated. Vibration sections 1030 and 1040 correspond to a waveform generated by combining the haptic pattern corresponding to the crumpled paper and the haptic pattern corresponding to the ballpoint pen. Such a result may be derived by combining the waveforms of FIGS. 9B and 9F. The waveform of FIG. 10 is only an embodiment of the present invention, and the waveform of the haptic pattern when characters are input to the crumpled paper by using the ballpoint pen may be variably changed or modified. Further, the waveform of the combined haptic pattern is generated in accordance with a degree of wrinkles of the crumpled paper. That is, a cycle becomes shorter when the degree of the wrinkles is high, and a cycle becomes longer when the degree of the wrinkles is low. Embodiments of the present invention allows the user to feel a haptic effect of the crumpled paper by providing the vibration.

FIGS. 9A to 9J are examples illustrating waveforms of various background material types and various pen types, according to embodiments of the present invention.

FIGS. 9A to 9E illustrate waveforms of different haptic patterns according to background types, and FIGS. 9F to 9J illustrate waveforms of different haptic patterns according to pen types.

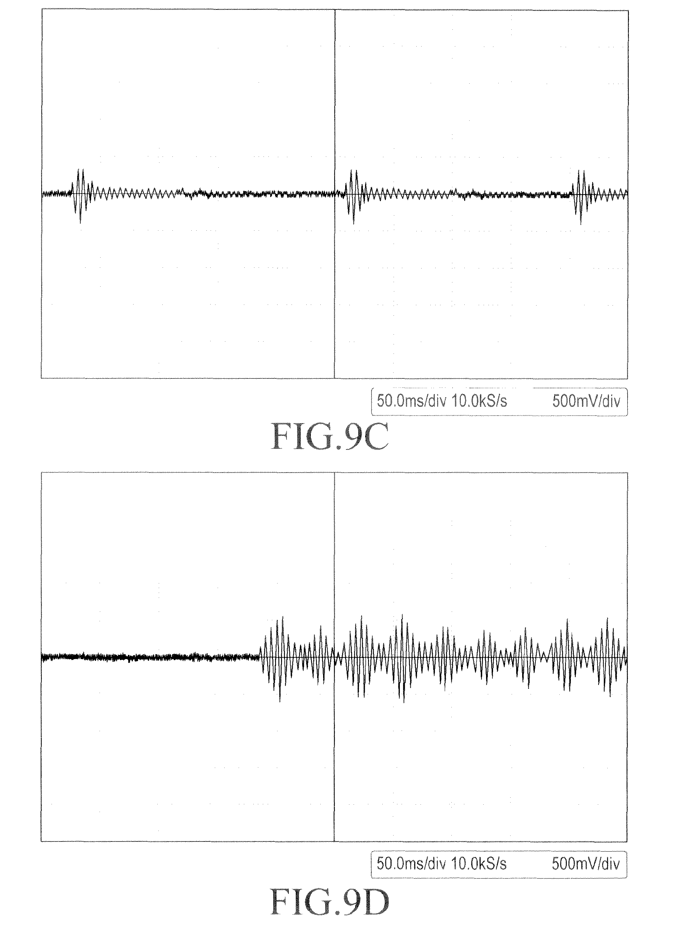

FIG. 9C is the waveform of the haptic pattern when the background material is wood, which vibrates at about 800 mV for about 200 ms and then vibrates again at about 800 mV for 20 ms after about 220 ms. A haptic feedback due to such a vibration corresponds to a tactile feeling felt by the user when the user actually writes characters or draws a picture on the wood. FIG. 9D is the waveform of the haptic pattern when the background material is cement, which vibrates with a gradually increasing vibration intensity and finally at 1 V for about 30 ms and then vibrates with a gradually decreasing vibration intensity. Such a vibration cycle repeatedly continues. Through a comparison between FIGS. 9D and 9C, it can be identified that the waveform of the haptic pattern of FIG. 9D has a somewhat higher vibration intensity than that of the waveform of the haptic pattern of FIG. 9C and its waveform cycle repeatedly continues. This is because a surface of the cement is actually rougher than that of the wood. Further, the haptic feedback due to the vibration corresponds to a tactile feeling felt by the user when the user writes characters or draws a picture on the cement. FIG. 9E is the waveform of the haptic pattern when the background material is old paper, which vibrates with a gradually increasing vibration intensity and finally at 300 mV for about 50 ms and then vibrates with a gradually decreasing vibration intensity. Such a vibration cycle is continuously and repetitively made. Through a comparison between FIGS. 9E and 9C, it can be identified that the waveform of the haptic pattern of FIG. 9E has a somewhat lower vibration intensity than that of the waveform of the haptic pattern of FIG. 9C and its vibration cycle is continuously and repetitively made. This is because a surface of the old paper is actually rougher than that of modern paper.

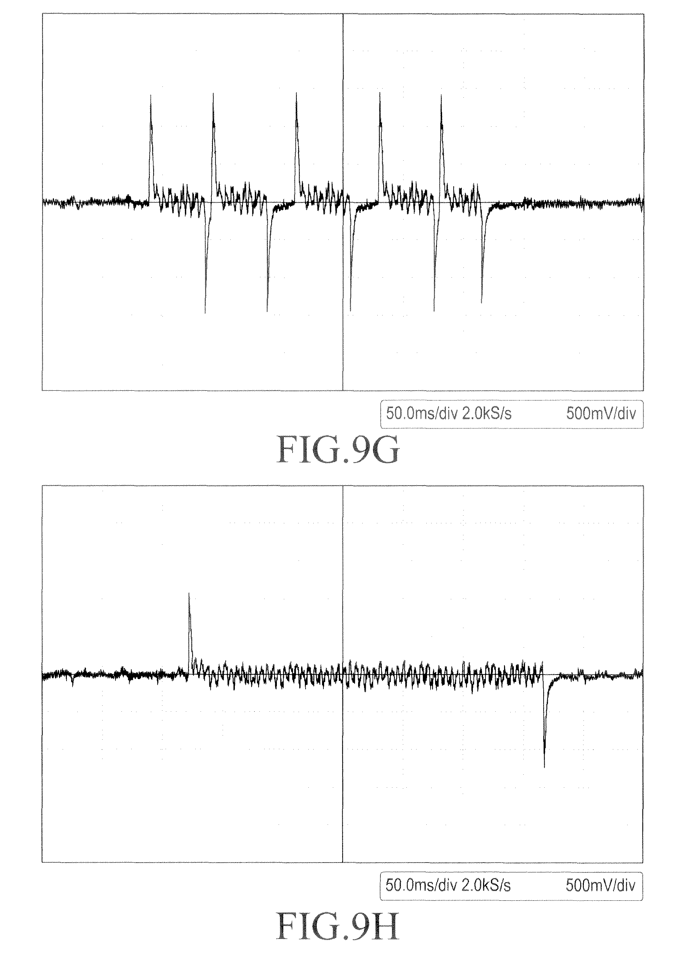

FIG. 9F is the waveform of the haptic pattern when the pen is the ballpoint pen. The haptic pattern when a pen function of the input unit is set as the ballpoint pen corresponds to a haptic pattern corresponding to a vibration actually felt by the user when the user writes by using the ballpoint pen. As described above, when the pen is the ballpoint pen, the waveform of the haptic pattern vibrates with a vibration intensity corresponding to a voltage of 30 mV for about 100 ms starting with a vibration intensity corresponding to a voltage of I V, and then vibrates again with a vibration intensity corresponding to the voltage of I V. Such a waveform cycle is aperiodically repeated. FIG. 9G is the waveform of the haptic pattern when the pen is the pencil. The haptic pattern corresponds to a haptic pattern corresponding to a vibration actually felt by the user when the user writes by using the pencil. When a character string is written, a cycle is about 50 ms and the waveform having a short cycle illustrated in FIG. 9G is generated since a length of one stroke and time spent for one stroke are substantially similar. That is, the waveform of the haptic pattern vibrates with a vibration intensity corresponding to a voltage of 50 mV for 100 ms starting with a vibration intensity corresponding to a voltage of 1 V and then vibrates again with the vibration intensity corresponding to the voltage of 1 V. Such a vibration cycle may be aperiodically repeated.

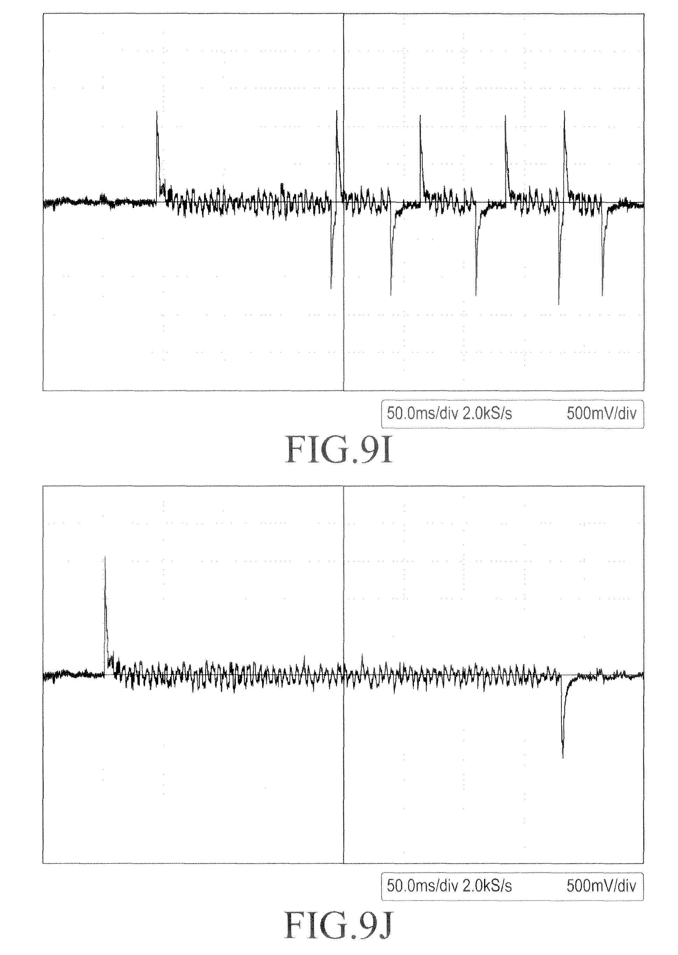

FIG. 9H illustrates a result of the waveform of the haptic pattern when the pen is the brush. It can be identified that a cycle of the waveform of FIG. 9H is one cycle longer than that of FIG. 9G in which the pen is the pencil. The reason is generally that one stroke of the pencil is short since the pencil is used for writing characters, but one stroke of the brush is long since the brush is used for drawing a picture or painting colors. Accordingly, when the pen function of the input unit is set as the brush, the vibration cycle by one control signal may be relatively longer than that of the pencil. FIG. 9I illustrates a result of the waveform of the haptic pattern when the pen is the fountain pen. It can be identified that a cycle of the waveform has irregularity. Referring to FIG. 9J, the waveform of the haptic pattern when the pen is the marker is illustrated. It can be identified that a cycle of the waveform is relatively longer than that of other pen types. This is because the marker is mainly used for swiping over a sentence in order to swipe over several to tens of character strings through only one movement in most cases. Accordingly, the haptic pattern of the marker is also longer than that of other pen types.

It may be appreciated that the embodiments of the present invention can be implemented in software, hardware, or a combination thereof. Any such software may be stored, for example, in a volatile or non-volatile storage device such as a ROM, a memory such as a RAM, a memory chip, a memory device, or a memory IC, or a recordable optical or magnetic medium such as a CD, a DVD, a magnetic disk, or a magnetic tape, regardless of its ability to be erased or its ability to be re-recorded. It can be also appreciated that the memory included in the mobile terminal is one example of machine-readable devices suitable for storing a program including instructions that are executed by a processor device to thereby implement embodiments of the present invention. Therefore, embodiments of the present invention provide a program including codes for implementing a system or method claimed in any claim of the accompanying claims and a machine-readable device for storing such a program.

Moreover, such a program as described above can be electronically transferred through an arbitrary medium such as a communication signal transferred through cable or wireless connection, and the present invention properly includes the things equivalent to that. Moreover, the above-described mobile terminal can receive the program from a program provision device which is connected thereto in a wired or wireless manner, and store the program. The program providing apparatus may include a memory for storing a program containing instructions for allowing the portable terminal to perform a preset content protecting method and information required for the content protecting method, a communication unit for performing wired or wireless communication with the portable terminal, and a controller for transmitting the corresponding program to the portable terminal according to a request of the portable terminal or automatically.

While the invention has been shown and described with reference to certain embodiments thereof, it will be understood by those skilled in the art that various changes in form and detail may be made therein without departing from the spirit and scope of the invention as defined by the appended claims.

**Claims**

**1.** A method of providing a haptic effect by a portable terminal, the method comprising the steps of:

displaying a writing application on a touch screen of the portable terminal;
receiving a selection for a type of pen used for writing in the displayed writing application and a selection for a background material on which the writing is performed using the selected type of pen;
combining a haptic pattern of the selected type of pen and a haptic pattern of the background material; and
outputting haptic feedback based on a combined haptic pattern of the selected type of pen and the background material.

**2.** The method of claim 1, wherein combining the haptic patterns comprises combining a vibration intensity of the haptic pattern of the selected type of pen and a vibration intensity of the haptic pattern of the selected background material.

**3.** The method of claim 2, wherein the haptic pattern of the selected type of pen is generated by multiplying a haptic pattern predetermined for the selected type of pen and a parameter value applied to the selected type of pen.

**4.** The method of claim 2, wherein the haptic pattern of the selected background material is generated by multiplying a haptic pattern predetermined for the selected background material and a parameter value applied to the selected background material.

**5.** The method of claim 1, further displaying a preview of showing in advance the haptic pattern of the selected pen, the haptic pattern of the background material, or the combined haptic pattern.

**6.** The method of claim 1, wherein the writing application comprises at least one of a menu for selecting the type of pen from a plurality of types of pens, a menu for selecting the background material from a plurality of background materials, a menu for erasing written contents from the selected background material, a menu for returning the written contents, and a menu for restoring the written contents.

**7.** A portable terminal providing a haptic effect, the portable terminal comprising:

a touch screen that displays a writing application, receives a selection for a type of a pen used for writing in the displayed writing application, and receives a selection for a background material on which the writing is made using the selected type of pen;
a controller that controls to output haptic feedback corresponding to a combination of a haptic pattern of the selected type of pen and a haptic pattern of the background material; and

a transceiver that transmits a control signal corresponding to the haptic feedback to an input unit.

8. The portable terminal of claim 7, further comprising a vibration motor that outputs a vibration corresponding to the haptic feedback.

9. The portable terminal of claim 7, wherein the controller combines a vibration intensity of the haptic pattern of the selected type of pen and a vibration intensity of the haptic pattern of the selected background material, and the combination is made by changing the vibration intensity of the selected type of pen to a voltage and changing the vibration intensity of the selected background material to a voltage to combine the changed voltage of the type of pen and the changed voltage of the background material.

10. The portable terminal of claim 7, wherein the controller controls the vibration motor to have a vibration corresponding to the haptic feedback while the writing is made on the background material using the selected type of pen.

11. The portable terminal of claim 7, wherein the controller displays a preview showing in advance the haptic pattern of the selected type of pen, the haptic pattern of the background material, or a haptic pattern generated by combining the haptic pattern of the selected type of pen and the haptic pattern of the background material on the touch screen.

12. A method of providing a haptic effect by an input unit, the method comprising the steps of:

receiving a control signal that controls a vibration of a vibration device of the input unit, at the input unit from a portable terminal; and
analyzing the received control signal to control the vibration of the vibration device,
wherein the control signal comprises a haptic pattern of a pen displayed on a touch screen of the portable terminal, a haptic pattern of a background material on which writing is made using the pen, or a haptic pattern generated by combining the haptic pattern of the pen and the haptic pattern of the background material.

13. The method of claim 12, further comprising controlling the vibration of the vibration device in accordance with the reception of the control signal corresponding to a preview of the haptic pattern of the pen, the haptic pattern of the background material, or the haptic pattern generated by combining the haptic pattern of the pen and the haptic pattern of the background material.

14. An input unit providing a haptic effect, the input unit comprising:

a vibration device that outputs a vibration;
a short distance communication unit that receives a control signal controlling a vibration of the vibration device, from a portable terminal; and
a haptic controller that analyzes the received control signal to control the vibration of the vibration device,
wherein the control signal comprises a haptic pattern of a pen displayed on a touch screen of the portable terminal, a haptic pattern of a background material on which writing is made using the pen, or a haptic pattern generated by combining the haptic pattern of the pen and the haptic pattern of the background material.

15. The input unit of claim 14, wherein the haptic controller analyzes control signals periodically received from the portable terminal while the writing is made on the background material by using the pen to control the vibration device to have a vibration corresponding to the haptic pattern generated by combining the haptic pattern of the pen and the haptic pattern of the background material.

FIG.1

FIG.2

FIG.3

168

420

190

430

h

440

450

460

FIG.4

168

SHORT DISTANCE COMMUNICATION UNIT (540)

HAPTIC CONTROLLER (530)

VIBRATION DEVICE (520)

BATTERY (550)

SPEAKER (560)

420

510

430

FIG.5

START

DISPLAY WRITING APPLICATION ~S610

DISPLAY PREVIEW IN ACCORDANCE WITH
SELECTIONS FOR PEN AND
BACKGROUND MATERIAL ~S612

COMBINE HAPTIC PATTERNS
CORRESPONDING TO SELECTED
BACKGROUND MATERIAL AND PEN ~S614

DISPLAY PREVIEW OF COMBINED
HAPTIC PATTERN ~S616

CONTROL VIBRATION BY COMBINED
HAPTIC PATTERN ~S618

END

FIG.6

FIG.7A

FIG.7B

FIG.7C

FIG.7D

FIG.7E

FIG.7F

FIG.8A

FIG.8B

FIG.8C

FIG.8D

FIG.8E

FIG.8F

920
910

50.0ms/div 10.0kS/s          500mV/div

FIG.9A

931          932          933

50.0ms/div 10.0kS/s          500mV/div

FIG.9B

50.0ms/div 10.0kS/s    500mV/div

FIG.9C

50.0ms/div 10.0kS/s    500mV/div

FIG.9D

50.0ms/div 10.0kS/s     500mV/div

FIG.9E

50.0ms/div 2.0kS/s     500mV/div

FIG.9F

50.0ms/div 2.0kS/s          500mV/div

FIG.9G

50.0ms/div 2.0kS/s          500mV/div

FIG.9H

50.0ms/div 2.0kS/s          500mV/div

FIG.9I

50.0ms/div 2.0kS/s          500mV/div

FIG.9J

1010  1020  1030  1040  1050

50.0ms/div 2.0kS/s    500mV/div

FIG.10